# EUROPÄISCHE PATENTSCHRIFT

(11) **EP 0 974 189 B1**
(45) Veröffentlichungstag und Bekanntmachung des Hinweises auf die Patenterteilung: **18.09.2002**
(21) Anmeldenummer: 98921409.3
(22) Anmeldetag: 01.04.1998
(51) Int. Cl.: H02P 7/638

(54) **VENTILATORKÜHLEINRICHTUNG**
FAN COOLER
DISPOSITIF DE REFROIDISSEMENT A VENTILATEUR

(30) Priorität: 10.04.1997 DE 19714856
(43) Veröffentlichungstag der Anmeldung: 26.01.2000
(73) Patentinhaber: Rittal-Werk Rudolf Loh GmbH & Co. KG, 35745 Herborn (DE)
(72) Erfinder: HAIN, Markus, D-35684 Dillenburg (DE); KREILING, Jörg, D-35444 Biebertal (DE)
(74) Vertreter: Fleck, Hermann-Josef, Dr.-Ing.
(86) Internationale Anmeldenummer: EP9801876
(87) Internationale Veröffentlichungsnummer: WO98045934

(56) Entgegenhaltungen:
- DE-A- 4 024 046
- DE-A- 4 413 130
- DE-A- 19 536 148
- GB-A- 2 200 006
- GB-A- 2 296 608
- BÖDEFELD/SEQUENZ: "Elektrische Maschinen, Eine Einführung in die Grundlagen, Seiten 196/197 und 306/307", 1971, SPRINGER-VERLAG, WIEN, NEW YORK

## Beschreibung

Die Erfindung bezieht sich auf eine Ventilatorkühleinrichtung für elektrische oder elektronische Baugruppen gemäß dem Oberbegriff des Anspruches 1.

Eine derartige Ventilatorkühleinrichtung ist in der UK-A 2 296 608 angegeben. Diese Druckschrift zeigt die Steuerung eines Lüftermotors an sich, wobei die Drehzahl auf der Basis einer prozentualen Erregung gesteuert wird. Ein Mikrocomupter wird als Steuereinheit verwendet und es ist auch ein Optokoppler in Form eines Photo-Triac erwähnt. Der Mikrocomputer hat einen Anschluss für externe Eingangssignale, an dem von einem weiteren Mikrocomputer ein Steuersignal eingegeben wird, das die prozentuale Erregung angibt. Der Mikrocomputer steuert den Lüftermotor auf der Grundlage einer Nulldurchgangserkennung (an einem Anschluss P3) und der Vorgabewerte.

Eine weitere Ventilatorkühleinrichtung ist in der DE 40 24 046 A1 als bekannt ausgewiesen. Diese bekannte Ventilatorkühleinrichtung weist als Lüftermotor einen kollektorlosen Gleichstrommotor auf, der drehzahlgesteuert in Abhängigkeit der Lufttemperatur angetrieben wird, wobei einer unteren festgelegten Grenztemperatur eine Mindestdrehzahl und einer oberen festgelegten Grenztemperatur eine maximale Drehzahl zugeordnet sind. Die Ansteuerschaltung ist dabei relativ aufwendig.

In der DE-A 44 13 130 ist ein in einem Schaltschrank angeordnetes Kühlgerät mit Verdampfereinheit, Verdichter und Verflüssigereinheit und einem zugehörigen Ventilator gezeigt.

Der Erfindung liegt die Aufgabe zugrunde, eine Ventilatorkühleinrichtung der eingangs angegeben Art bereit zu stellen, die bei einfachem Aufbau vielfältige Steuerungsmöglichkeiten zuläßt.

Diese Aufgabe wird mit den Merkmalen des Anspruches 1 gelöst.
Durch Verwendung des Asynchronmotors als Lüftermotor wird eine einfache Ansteuerung ermöglicht, wobei die zugeführte Leistung mittels einer an sich bekannten Phasenanschnittsteuerung mit einfachen Mitteln variierbar ist. Eine gewünschte Ansteuerung kann dadurch leicht vorgegeben und an unterschiedliche Bedingungen einfach dadurch angepasst werden, dass der eigentlichen Ansteuerstufe des Lüftermotors der Mikrocontroller vorgeschaltet ist. Dabei wird der Mikrocontroller nur minimal belastet, da zwischen ihm und der Ansteuerstufe ein Optokoppler angeordnet ist, der zudem eine galvanische Trennung ergibt. Die Ansteuerdaten können von dem Mikrocontroller ohne aufwendige Schaltmaßnahmen bereitgestellt werden.

Durch die weiteren Maßnahmen, dass der Ventilator in einem Schaltschrank angeordnet ist, dass der Mikrocontroller an eine übergeordnete Schaltschranksteuerung angeschlossen ist und dass mittels der Schaltschranksteuerung oder manuell so wählbar ist, dass der Mikrocontroller den Lüftermotor entweder auf der Grundlage unmittelbarer in ihn eingegebener Vorgabewerte selbständig oder auf der Grundlage von über die Schaltschranksteuerung zuge-führter Vorgabewerte ansteuert, kann die Ventilatorkühleinrichtung zur An-steuerung des Lüftermotors entweder autonom oder in Abhängigkeit von einer übergeordneten Steuereinheit arbeiten.

Eine einfache Änderung der Ansteuerung lässt sich dadurch erzielen, dass die Vorgabewerte eine Minimaldrehzahleinstellung, einen Sollwert und einen Istwert umfassen und dass die Minimaldrehzahleinstellung mittels einer Minimaldrehzahl-Einstelleinheit und der Sollwert mittels einer Sollwertvorgabeeinheit einstellbar ist.

Für die Ankopplung des Mikrocontrollers und die Signalübertragung ist weiterhin die Maßnahme vorteilhaft, dass zwischen einer Nulldurchgangserkennungsschaltung und dem Mikrocontroller ein weiterer Optokoppler angeordnet ist. Auch für diesen Anschluß wird damit eine galvanische Trennung erreicht.

Eine weitere vorteilhafte Maßnahme besteht darin, dass der Optokoppler als Opto-Triac ausgebildet ist. Damit kann der Optokoppler verschiedene Schaltfunktionen übernehmen.

Weiter kann der Aufbau derart sein, dass sie Teil einer Gesamtkühlanordnung ist, die eine Kombination aus mehreren Ansteuerschaltungen mit zugeordneten Ventilatoren oder eine Kombination aus mindestens einer Ansteuerschaltung mit zugeordnetem Ventilator und anderen Kühlgeräten umfasst und dass mittels der Schaltschranksteuerung die Kühlgeräte nach einem vorgegebenen Programm ansteuerbar sind. Fällt dabei z.B. eine Ventilatorkühleinrichtung aus, so kann deren Ausfall von anderen Komponenten der Gesamtkühlanordnung ausgeglichen werden. Oder eine Ventilatorkühleinrichtung kann z.B. dann abgeschaltet werden, wenn sie fehlerhaft arbeitet oder eine geringere Geräuschentwicklung erwünscht ist. Diese Betriebsweisen können mittels einfacher Programmierung der Schattschranksteuerung ausgewählt werden.

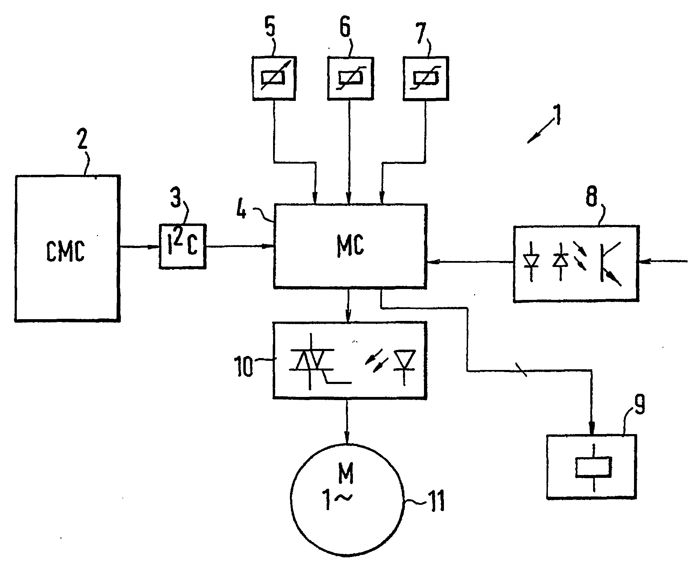

Die Erfindung wird nachfolgend anhand eines Auführungsbeispiels unter Bezugnahme auf die Zeichnung näher erläutert. Die Fig. zeigt schematisch ein Schaltbild einer Ventilatorkühleinrichtung.

Die Ventilatorkühleinrichtung weist eine Ansteuerschaltung 1 für einen Lüftermotor 11 auf. Die Ansteuerschaltung 1 ist mittels eines I²C-Busses an eine übergeordnete Schaltschranksteuerung 2 angeschlossen. Als zentrale Steuerungsbaustufe enthält die Ansteuerschaltung 1 einen Mikrocontroller 4, der in Abhängigkeit von Vorgabewerten über einen Optokoppler 10 in Form eines Opto-Triacs eine (nicht näher gezeigte) Ansteuerstufe und über diese den Lüftermotor 11 ansteuert. Über einen weiteren Optokoppier 8 empfängt der Mikrocontroller 4 Signale für eine Nulldurchgangserkennung der Ansteuersignale für den Lüftermotor 11. Mittels einer Minimaldrehzahl-Einstelleinheit 5 und einer Sollwertvorgabeeinheit 7 sind eine minimale Drehzahl sowie ein Sollwert für die Temperatur einstellbar. Für die Drehzahlregelung ist weiterhin eine Istwerterfassungseinheit 6 zum Feststellen einer vorhandenen Temperatur vorgesehen.

Die Ansteuerstufe des Lüftermotors 11 arbeitet nach dem Phasenanschnittverfahren, wobei der Mikrocontroller 4 je nach benötigter Leistung des Lüftermotors 11 ein Signal für den Phasenanschnittwinkel abgibt. Durch den Optokoppler 10 und den weiteren Optokoppler 8 ist der Mikrocontroller 4 gegen ein Auftreten überhöhter Spannungen geschützt und außerdem nur geringfügig belastet.

Bei Auftreten eines Fehlers (Fühlerüberwachung, Ventilatorüberwachung, Übertemperaturüberwachung) kann der Mikrocontroller 4 ein Störmeldesignal abgeben, das ein Störmelderelais 9 zur Signalisierung des Störzustandes ansteuert.

Der Mikrocontroller 4 kann die Steuerung des Lüftermotors 11 entweder selbständig auf der Grundlage von Vorgabewerten vornehmen, die die Minimaldrehzahl, den Istwert der Temperatur und deren Sollwert umfassen, oder er kann mittels der Schaltschranksteuerung 2 umgesteuert werden, so daß er die Steuerung aufgrund von der Schaltschranksteuerung 2 zugeführter Daten durchführt. Damit kann die Ventilatorkühleinrichtung als Teil einer Gesamtsteuerung betrieben werden, beispielsweise in Kombination mit anderen Ventilatorkühleinrichtungen oder in Kombination mit anderen Kühlgeräten. Bei Auftreten eines Fehlers kann die Ventilatorkühleinrichtung abgeschaltet und ihre Funktion von einem anderen Kühlgerät oder dem Zusammenwirken anderer Kühlgeräte übernommen werden. Mit dieser Einbindung in die Schaltschranksteuerung lassen sich durch einfaches Programmieren vielfältige Betriebsweisen realisieren, die auch tageszeitabhängig oder in Abhängigkeit der Umgebungsbedingungen festgelegt werden können.

## Patentansprüche

1. Ventilatorkühleinrichtung für elektrische oder elektronische Baugruppen mit einer eine Ansteuerstufe aufweisenden Ansteuerschaltung (1), die zur Drehzahlsteuerung eines an die Ansteuerstufe angeschlossenen Lüftermotors in Abhängigkeit von Vorgabewerten ausgebildet ist,
wobei der Lüftermotor (11) als Asynchronmotor ausgebildet und mittels Phasenanschnittsteuerung angesteuert ist,
wobei die Ansteuerschaltung (1) einen der Ansteuerstufe vorgeschalteten Mikrocontroller (4) umfasst,
wobei zwischen die Ansteuerstufe und den Mikrocontroller (4) ein Optokoppler (10) geschaltet ist,
wobei der Mikrocontroller (4) auf der Grundlage einer Nulldurchgangserkennung eines Ansteuersignals und der Vorgabewerte den Phasenanschnittwinkel für die Ansteuerung des Lüftermotors (11) bestimmt und
wobei der Mikrocontroller (4) an eine übergeordnete Steuerung (2) angeschlossen ist und den Lüftermotor (11) aufgrund ihm von der übergeordneten Steuerung zugeführter Vorgabewerte ansteuert,
**dadurch gekennzeichnet,**
**dass** die Ventilatorkühleinrichtung einen Schaltschrank umfasst,
**dass** der Ventilator in dem Schaltschrank angeordnet ist,
**dass** die übergeordnete Steuerung eine Schaltschranksteuerung (2) ist und
**dass** mittels der Schaltschranksteuerung (2) oder manuell wählbar ist,
**dass** der Mikrocontroller (4) den Lüftermotor entweder auf der Grundlage unmittelbar in ihn eingegebener Vorgabewerte selbstständig oder aufgrund der ihm von der Schaltschranksteuerung (2) zugeführten Vorgabewerte ansteuert.

2. Ventilatorkühleinrichtung nach Anspruch 1,
**dadurch gekennzeichnet,**
**dass** die Vorgabewerte eine Minimaldrehzahleinstellung, einen Sollwert und einen Istwert umfassen und
**dass** die Minimaldrehzahleinstellung mittels einer Minimaldrehzahl-Einstelleinheit (5) und der Sollwert mittels einer Sollwertvorgabeeinheit (7) einstellbar sind.

3. Ventilatorkühleinrichtung nach Anspruch 1 oder 2,
**dadurch gekennzeichnet,**
**dass** zwischen einer Nulldurchgangserkennungsschaltung und dem Mikrocontroller (4) ein weiterer Optokoppler (8) angeordnet ist.

4. Ventilatorkühleinrichtung nach einem der vorhergehenden Ansprüche,
**dadurch gekennzeichnet,**
**dass** der Optokoppler (10) als Opto-Triac ausgebildet ist.

5. Ventilatorkühleinrichtung nach einem der vorhergehenden Ansprüche,
**dadurch gekennzeichnet,**
**dass** sie Teil einer Gesamtkühlanordnung ist, die eine Kombination aus mehreren Ansteuerschaltungen (1) mit zugeordneten Ventilatoren oder eine Kombination aus mindestens einer Ansteuerschaltung mit zugeordnetem Ventilator und anderen Kühlgeräten umfasst und
**dass** mittels der Schaltschranksteuerung (2) die Kühlgeräte nach einem vorgegebenen Programm ansteuerbar sind.

## Claims

1. Fan cooling means for electrical or electronic assemblies, said means having an actuating circuit (1) which has an actuating stage and is provided to control the speed of a fan motor, communicating with the actuating stage, in dependence on control values, the fan motor (11) being in the form of an asynchronous motor and being actuated by means of phase angle control, the actuating circuit (1) including a microcontroller (4) which precedes the actuating stage, an optical coupler (10) being connected between the actuating stage and the microcontroller (4), the microcontroller (4) determining the phase angle for actuating the fan motor (11) on the basis of a zero crossover detection of an actuating signal and the control values, and the microcontroller (4) communicating with a primary control (2) and actuating the fan motor (11) based on control values which have been supplied thereto by the primary control, **characterised in that** the fan cooling means includes a switchgear cabinet, **in that** the fan is disposed in the switchgear cabinet, **in that** the primary control is a switchgear cabinet control (2), **in that** the fan is selectable by means of the switchgear cabinet control (2) or manually, and **in that** the microcontroller (4) actuates the fan motor either on the basis of control values automatically, which values are input therein directly or based on the control values which are supplied thereto by the switchgear cabinet control (2).

2. Fan cooling means according to claim 1, **characterised in that** the control values include a minimum speed setting, a desired value and an actual value, and **in that** the minimum speed setting is adjustable by means of a minimum speed setting unit (5), and the desired value is adjustable by means of a desired value control unit (7).

3. Fan cooling means according to claim 1 or 2, **characterised in that** an additional optical coupler (8) is disposed between a zero crossover detection circuit and the microcontroller (4).

4. Fan cooling means according to one of the preceding claims, **characterised in that** the optical coupler (10) is in the form of an optical triac.

5. Fan cooling means according to one of the preceding claims, **characterised in that** it is part of an overall cooling arrangement which includes a combination of a plurality of actuating circuits (1) with associated fans or a combination of at least one actuating circuit with an associated fan and other cooling appliances, and **in that** the cooling appliances are actuatable according to a predetermined program by means of the switchgear cabinet control (2).

## Revendications

1. Dispositif de refroidissement à ventilateur pour groupe constructif électrique ou électronique avec un circuit d'excitation (1), présentant un étage d'excitation, qui est formé pour la commande de la vitesse de rotation d'un moteur de ventilateur, raccordé à l'étage d'excitation, en dépendance de valeurs de référence,
le moteur de ventilateur (11) étant réalisé sous forme d'un moteur asynchrone et étant excité au moyen d'une commande par réglage de phase,
le circuit d'excitation (1) comprenant un microcontrôleur (4) couplé en série à l'étage d'excitation,
un optocoupleur (10) étant connecté entre l'étage d'excitation et le microcontrôleur (4),
le microcontrôleur (4) déterminant l'angle de fonctionnement pour l'excitation du moteur de ventilateur (11) sur la base de la reconnaissance d'un passage par zéro d'un signal d'excitation et des valeurs de référence et
le microcontrôleur (4) étant raccordé à une commande prioritaire (2) et excitant le moteur de ventilateur (11) sur la base de valeurs de référence qui lui sont envoyées par la commande prioritaire,
**caractérisé en ce**
**que** le dispositif de refroidissement à ventilateur comprend une armoire de distribution,
**que** le ventilateur est disposé dans l'armoire de distribution,
**que** la commande prioritaire est une commande d'armoire de distribution (2) et
**que**, au moyen de la commande d'armoire de distribution (2) ou manuellement, on peut sélectionner que le microcontrôleur (4) excite le moteur de ventilateur soit automatiquement sur la base de valeurs de référence introduites directement dedans soit sur la base de valeurs de référence qui lui sont amenées par la commande d'armoire de distribution (2).

2. Dispositif de refroidissement à ventilateur selon la revendication 1,
**caractérisé en ce**
**que** les valeurs de référence comprennent une mise au point de la vitesse de rotation minimale, une valeur de consigne et une valeur instantanée et
**que** la mise au point de la vitesse de rotation minimale est réglable au moyen d'une unité de réglage de la vitesse de rotation minimale (5) et de la valeur de consigne au moyen d'une unité d'allocation de valeur de consigne (7).

3. Dispositif de refroidissement à ventilateur selon la revendication 1 ou 2,
**caractérisé en ce**
**qu'**un optocoupleur (8) supplémentaire est disposé entre un circuit de reconnaissance d'un passage par zéro et le microcontrôleur (4),

4. Dispositif de refroidissement à ventilateur selon l'une des revendications précédentes,
**caractérisé en ce**
**que** l'optocoupleur (10) est réalisé sous forme d'un opto-triac.

5. Dispositif de refroidissement à ventilateur selon l'une des revendications précédentes,
**caractérisé en ce qu'**il est une partie d'une structure d'ensemble de refroidissement qui comprend une combinaison de plusieurs circuits d'excitation (1) avec des ventilateurs adjoints ou une combinaison d'au moins un circuit d'excitation à ventilateur adjoint et d'autres appareils de refroidissement et
que les appareils de refroidissement peuvent être excités au moyen de la commande d'armoire de distribution (2) selon un programme prédéfini.
